# FASCICULE DE BREVET EUROPEEN

(11) **EP 1 085 764 B1**
(45) Date de publication et mention de la délivrance du brevet: **09.08.2006**
(21) Numéro de dépôt: 00410113.5
(22) Date de dépôt: 12.09.2000
(51) Int. Cl.: H04N 7/50

(54) **Décodage et affichage à répétition d'images MPEG**
MPEG Videodekodierung und Anzeige mit Wiederholung
Repetitive decoding and display of MPEG images

(30) Priorité: 14.09.1999 FR 9911608
(43) Date de publication de la demande: 21.03.2001
(73) Titulaire: STMicroelectronics S.A., 92120 Montrouge (FR)
(72) Inventeur: Marty, Pierre, 38180 Seyssins (FR)
(74) Mandataire: de Beaumont, Michel

(56) Documents cités:
- EP-A- 0 786 906
- US-A- 5 818 533
- US-A- 5 828 412
- US-A- 5 892 522

## Description

La présente invention concerne des circuits de décodage et d'affichage d'images codées selon la norme MPEG, et plus particulièrement un circuit intégré permettant de répéter deux fois chaque image décodée.

La norme de codage MPEG permet de mémoriser les images d'une séquence d'images numériques dans un espace mémoire réduit. Le codage MPEG prévoit de numériser les images d'une séquence selon trois catégories. Les images extrêmes de la séquence sont codées de façon autonome et sont appelées images "intra". Un certain nombre d'images intermédiaires, appelées images "prédites" sont codées en tenant compte de leur différence avec l'image intra ou prédite qui les précède. Les autres images, appelées images "bidirectionnelles" sont codées en tenant compte des images intra ou prédites qui les encadrent. Une séquence d'images ainsi codée peut être stockée, par exemple dans une première mémoire, et un décodeur MPEG est utilisé pour la décoder. Du fait de la nature des codages, le décodeur MPEG doit stocker dans une mémoire tampon deux images successives intra/prédites qu'il vient de décoder afin de pouvoir décoder les images bidirectionnelles suivantes. La première mémoire et la mémoire tampon peuvent être confondues en une même mémoire.

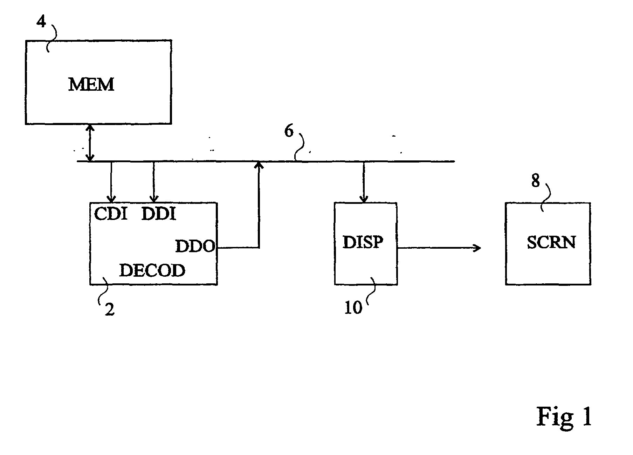

La figure 1 représente schématiquement un circuit de décodage et d'affichage d'images codées selon la norme MPEG. Ce circuit comprend notamment un décodeur 2 connecté à une mémoire 4, comprenant une mémoire tampon et une mémoire de données compressées, par l'intermédiaire d'un bus bidirectionnel 6 pour recevoir des images codées et décodées respectivement sur une entrée de données codées CDI et une entrée de données décodées DDI. Le décodeur 2 fournit en outre des images décodées à la mémoire 4 depuis une sortie de données décodées DDO connectée au bus 6. Un dispositif d'affichage 8, par exemple un écran de télévision (SCRN), affiche des images décodées lues dans la mémoire 4 par l'intermédiaire d'un circuit d'affichage 10 relié au bus 6.

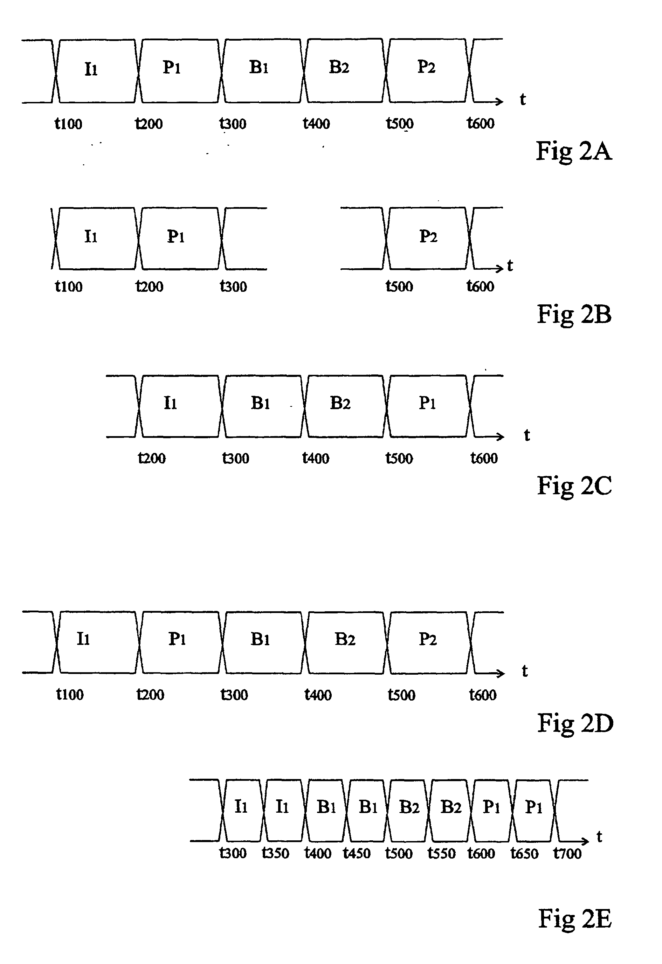

Les figures 2A, 2B et 2C illustrent respectivement le décodage, le stockage et l'affichage d'une séquence d'images codées selon la norme MPEG. On suppose, pour simplifier, qu'il n'y a que deux images bidirectionnelles entre une image intra et une image prédite, et entre deux images prédites successives. On suppose également que le décodage et l'affichage de chaque image prennent le même temps. La séquence prise comme exemple, illustrée en figure 2C, comprend une image intra I₁, deux images bidirectionnelles B₁ et B₂ puis une image prédite P₁. Aux figures 2A et 2B, une seconde image prédite P₂ correspond à des images bidirectionnelles non représentées d'une suite de la séquence.

Comme illustré en figure 2C, les images I₁, B₁, B₂ et P₁ sont respectivement affichées entre des instants t₂₀₀, t₃₀₀, t₄₀₀, t₅₀₀ et t₆₀₀. L'affichage illustré est un affichage simple et chaque image est affichée une fois. Pour permettre cet affichage, il faut d'abord décoder les images I₁ et P₁ puis les images B₁ et B₂ (figure 2A). Comme on a besoin des images I₁ et P₁ pour décoder les images B₁ et B₂, il faut les mémoriser (figure 2B). Par contre, les images bidirectionnelles peuvent, pour ce type d'affichage, être décodées à mesure qu'elles sont affichées et n'ont pas besoin d'être stockées.

On notera qu'il est important pour le fonctionnement qui vient d'être décrit que les vitesses de décodage et d'affichage des images bidirectionnelles soient les mêmes. En effet, un décodage plus rapide de ces images obligerait à les stocker avant de les afficher. L'affichage simple que l'on vient de décrire est par exemple utilisé dans des systèmes de télévision affichant les images avec une fréquence de 50 ou 60 hertz.

Il existe un autre type d'affichage dans lequel on répète deux fois chaque image décodée pendant la durée précédente d'affichage d'une image, afin de réduire le scintillement des images à l'écran. Un tel affichage à répétition, qui sera détaillé par la suite, est par exemple utilisé dans des systèmes de télévision dits à "100 hertz" ou "120 hertz". On notera qu'il est concevable, pour effectuer un affichage à répétition, d'utiliser un décodeur fonctionnant à vitesse double. Dans un tel cas, il serait possible de décoder et d'afficher les images bidirectionnelles sans les stocker. Cependant, un décodeur rapide est coûteux, et on préfère décoder les images bidirectionnelles à vitesse normale et les stocker pour les afficher ensuite deux fois à vitesse double.

Les figures 2D et 2E illustrent respectivement le stockage et l'affichage à répétition d'une séquence d'images telle que celle décrite précédemment. Le décodage de la séquence se fait à vitesse normale, comme illustré en figure 2A, et l'affichage à répétition des images décodées se fait avec un certain retard. Dans un premier temps, on suppose qu'une image doit être entièrement décodée pour être affichée.

Comme cela est illustré en figure 2E, l'image B₁ est affichée 2 fois à partir de la fin de son décodage, entre l'instant t₄₀₀ et un instant t₄₅₀, situé à la moitié de l'intervalle t₄₀₀-t₅₀₀, puis entre les instants t₄₅₀ et t₅₀₀. De même, l'image B₂ est affichée à la même vitesse deux fois entre les instants t₅₀₀ et t₅₅₀, et t₅₅₀ et t₆₀₀. L'image I₁ est affichée 2 fois avant l'image B₁, entre les instants t₃₀₀ et t₃₅₀, et t₃₅₀ et t₄₀₀. Enfin, l'image P₁ est affichée deux fois après l'image B₂, entre les instants t₆₀₀ et t₆₅₀, et t₆₅₀ et t₇₀₀.

La figure 2D illustre le stockage de la séquence, dans lequel les images B₁ et B₂ sont toutes deux stockées en mémoire tampon. Cette mémoire doit ainsi pouvoir contenir quatre images décodées. On notera qu'il est suffisant de ne stocker que deux images bidirectionnelles décodées. En effet, une troisième image bidirectionnelle suivant l'image B₂ serait décodée après l'affichage de l'image B₁, et elle pourrait être stockée à sa place en mémoire tampon. Si l'on considère l'affichage d'images ayant 720 x 576 pixels, une image décodée occupe un espace important en mémoire tampon. Un système tel que celui qui vient d'être décrit, qui devrait permettre le décodage et l'affichage à répétition de telles images, devrait ainsi utiliser une mémoire tampon de grande taille, coûteuse. Cependant, il existe un besoin pour un circuit peu coûteux permettant un tel fonctionnement, destiné à des postes de télévision à bon marché.

Le brevet US-A-5818533 (Motorola) propose un mode de dédocage particulier d'une image MPEG. Il décrit un procédé de décodage et d'affichage d'une image numérique, le décodage de l'image étant deux fois plus long que l'affichage d'une trame, qui comprend notamment les étapes suivantes: décoder l'image dans les unités de tranches en stockant progressivement la première trame, afficher la première trame, décoder l'image dans l'unité de tranche une seconde fois en stockant progressivement la seconde trame, afficher la seconde trame.

Un objet de la présente invention est de prévoir un circuit de décodage et d'affichage à répétition utilisant une mémoire peu coûteuse.

Pour atteindre cet objet, la présente invention prévoit un tel circuit qui met en oeuvre un procédé de décodage et d'affichage permettant de réduire la taille de la mémoire.

Pour atteindre ces objets, la présente invention prévoit un procédé de décodage et d'affichage d'une image numérique codée sous forme de deux trames entrelacées, le décodage de l'image étant deux fois plus long que l'affichage d'une trame, qui comprend notamment les étapes consistant à :
a/ décoder la première moitié de l'image en stockant progressivement la première moitié de la première trame,
b/ décoder la seconde moitié de l'image en stockant progressivement la seconde moitié de la première trame, tout en affichant une première fois la première trame,
c/ afficher une seconde fois la première trame, tout en décodant à nouveau la première moitié de l'image et en remplaçant progressivement en mémoire la première moitié de la première trame par la première moitié de la seconde trame,
d/ décoder la seconde moitié de l'image en remplaçant progressivement la seconde moitié de la première trame par la seconde moitié de la seconde trame, tout en affichant une première fois la seconde trame, et
e/ afficher une seconde fois la seconde trame tandis que l'on répète l'étape a/.

Selon un mode de réalisation de la présente invention, l'image est une image bidirectionnelle codée suivant la norme MPEG.

La présente invention vise également un circuit destiné à mettre en oeuvre le procédé précédent, comprenant un décodeur MPEG et une mémoire ayant une capacité de mémorisation correspondant au nombre de données contenues dans deux images décodées et demie.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement un circuit de décodage et d'affichage de séquences d'images codées selon la norme MPEG ;
les figures 2A à 2C, précédemment décrites, illustrent un exemple de décodage, de stockage et d'affichage simple d'une séquence d'images codées selon la norme MPEG ;
les figures 2D et 2E, précédemment décrites, illustrent un exemple de stockage et d'affichage à répétition d'une séquence d'images codées selon la norme MPEG ;
les figures 3A à 3C illustrent un exemple de décodage, de stockage et d'affichage à répétition de type AABB d'une séquence d'image ;
les figures 4A à 4C illustrent un exemple de décodage, de stockage et d'affichage à répétition de type AABB d'une séquence d'image selon la présente invention ; et
les figures 5A à 5C illustrent de manière plus précise les décodage, stockage et affichage illustrés en figures 4A à 4C.

De mêmes références représentent de mêmes instants en figures 2A à 5C.

On a évoqué en figures 2D et 2E le décodage et l'affichage à répétition d'une séquence d'images codées selon la norme MPEG. Pour des raisons de simplicité, ces figures ne détaillaient ni la structure des images, ni leur affichage. En réalité, une image destinée à être affichée sur un écran de télévision est classiquement divisée en deux "trames" entrelacées, chaque trame étant sensiblement composée d'une ligne de l'image sur deux. En affichage simple, les deux trames d'une image sont affichées chacune une fois en une période prédéterminée, par exemple 1/50^{ème} de seconde dans le cas d'une télévision fonctionnant à 50 hertz. En affichage à répétition, les première et seconde trames d'une image sont affichées chacune deux fois lors de cette période prédéterminée. Selon un premier mode d'affichage, appelé affichage de type ABAB, une succession des première et seconde trames est affichée deux fois. Selon un second mode d'affichage appelé affichage de type AABB, la première trame est affichée deux fois puis la seconde trame est affichée deux fois. Une image numérique comprenant une première et une seconde trame peut être codée selon la norme MPEG de deux manières différentes. Une première manière consiste à coder séparément la première et la seconde trame (image "FIELD"), une deuxième manière consiste à coder en une seule fois l'image complète (image "FRAME"). On notera que pour afficher une trame d'une image FIELD, il faudra seulement décoder cette trame, alors que pour afficher une trame d'une image FRAME, il sera nécessaire de décoder toute l'image. Les décodeurs MPEG réalisés selon l'état de la technique permettent de décoder une image FRAME de 720 x 576 pixels en la moitié d'une période d'affichage d'une image complète, soit deux fois le temps nécessaire pour l'affichage d'une trame. La présente invention s'applique au décodage d'une séquence de telles images FRAME et à son affichage à répétition de type AABB.

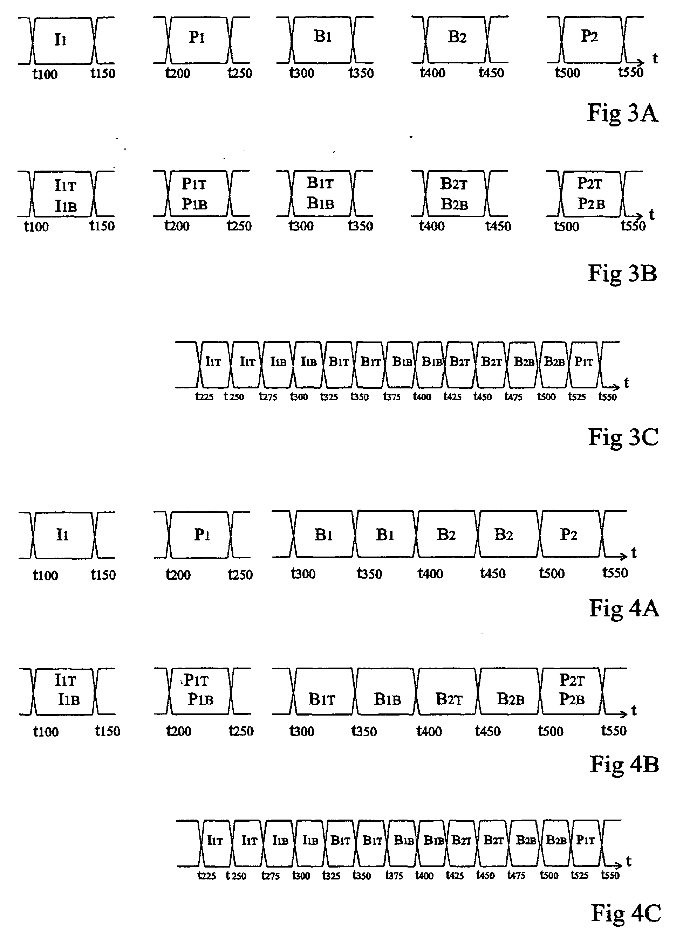

Les figures 3A, 3B et 3C illustrent respectivement un décodage, un stockage et un affichage à répétition dans de telles conditions. Les images I₁, P₁, B₁ et B₂ sont chacune codées sous la forme de deux trames entrelacées, respectivement I_{1T} et I_{1B}, P_{1T} et P_{1B}, B_{1T} et B_{1B}, et B_{2T} et B_{2B}.

Dans l'affichage illustré en figure 3C, la première trame B_{1T} de l'image B₁ est affichée une première fois entre un instant t₃₂₅ situé à la moitié de l'intervalle t₃₀₀-t₃₅₀, et l'instant t₃₅₀. La première trame B_{1T} est affichée une seconde fois entre les instants t₃₅₀ et t₃₇₅. De même, sa seconde trame B_{1B} est affichée deux fois entre les instants t₃₇₅ et t₄₀₀, et t₄₀₀ et t₄₂₅. Les première et seconde trames de la deuxième image bidirectionnelle B₂ sont affichées deux fois respectivement entre les instants t₄₂₅ et t₄₅₀, t₄₅₀ et t₄₇₅, t₄₇₅ et t₅₀₀, et t₅₀₀ et t₅₂₅. Les deux trames de l'image I1 sont affichées de la même manière avant l'image B₁, entre les instants t₂₂₅ et t₃₂₅, et les deux trames de l'image P₁ sont affichées de la même manière après l'image B₂, à partir de l'instant t₅₂₅.

Dans le décodage et le stockage illustrés en figures 3A et 3B, l'image B₁ est décodée et ses deux trames sont stockées entre les instants t₃₀₀ et t₃₅₀. Ainsi, l'image B₁ est à moitié décodée et stockée en mémoire tampon quand on commence à afficher la première trame B_{1T}. Le décodage et le stockage de l'image se terminent en même temps que la fin de ce premier affichage. On notera qu'il existe un retard, non représenté, entre le stockage d'une ligne décodée en mémoire tampon et son affichage. Ainsi, la dernière ligne de la première trame B_{1T} est stockée en mémoire tampon, puis affichée. De la même façon, l'image B₂ est décodée et ses deux trames sont stockées entre les instants t₄₀₀ et t₄₅₀. Le découpage et le stockage de l'image B₂ débutent lors du second affichage de la seconde trame B_{1B}. On organise le stockage de l'image B₂ en mémoire tampon de manière qu'il soit fait uniquement dans des zones de la mémoire tampon pour remplacer des lignes de l'image précédente déjà affichées. On peut ainsi stocker les images bidirectionnelles décodées dans un même espace de la mémoire tampon, ce qui fait que la mémoire tampon ne doit contenir que trois images décodées.

La présente invention prévoit un procédé de décodage et d'affichage à répétition de type AABB d'une séquence d'images FRAME qui permet d'utiliser une mémoire ne devant contenir que deux images décodées et demie.

Les figures 4A, 4B et 4C illustrent respectivement le décodage, le stockage et l'affichage de la séquence précédente selon un tel procédé.

Comme cela est illustré en figure 4C, l'affichage de la séquence est le même qu'en figure 3C.

On décode complètement deux fois chaque image bidirectionnelle (figure 4A), et on stocke à chaque fois une trame seulement (figure 4B). Le décodage et le stockage des images I₁ et P₁ sont les mêmes qu'en figure 3A. Par contre, l'image B₁ est décodée une première fois entre les instants t₃₀₀ et t₃₅₀ et une seconde fois entre les instants t₃₅₀ et t₄₀₀. De même, l'image B₂ est décodée une première fois entre les instants t₄₀₀ et t₄₅₀ et une seconde fois entre les instants t₄₅₀ et t₅₀₀. Seule la première trame B_{1T} de l'image B₁ est stockée entre les instants t₃₀₀ et t₃₅₀ et seule la seconde trame B_{1B} de l'image B₁ est stockée entre les instants t₃₅₀ et t₄₀₀. De même, la première trame B_{2T} de l'image B₂ est stockée entre les instants t₄₀₀ et t₄₅₀ et la seconde trame B_{2B} de l'image B₂ est stockée entre les instants t₄₅₀ et t₅₀₀. On notera qu'à mesure que la première trame B_{1T} est affichée pour la seconde fois, elle est remplacée en mémoire par la deuxième trame B_{1B} qui est décodée à mesure. Ainsi, selon la présente invention, seule une trame d'une image bidirectionnelle est stockée en mémoire, à mesure qu'elle est décodée, et la mémoire ne doit contenir que deux images décodées et demie.

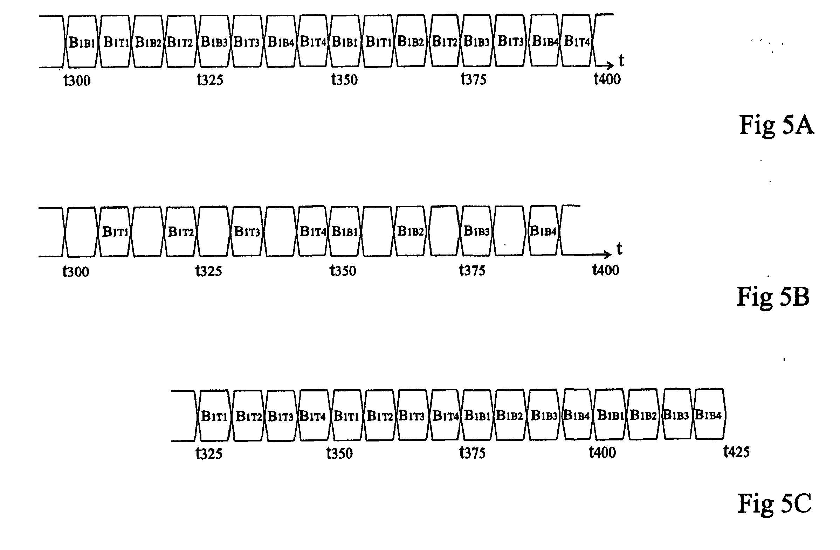

Les figures 5A, 5B et 5C illustrent plus en détail le décodage, le stockage et l'affichage de l'image bidirectionnelle B₁ précédente. Pour des raisons de clarté, on a représenté une image B₁ comprenant seulement huit lignes : quatre lignes B_{1T1} à B_{1T4} dans la première trame, intercalées avec quatre lignes B_{1B1} à B_{1B4} dans la seconde trame. Dans l'exemple illustré, la ligne B_{1B1} est la première ligne décodée.

Comme cela est illustré en figure 5C, la première trame est affichée une première fois entre les instants t₃₂₅ et t₃₅₀, et une seconde fois entre les instants t₃₅₀ et t₃₇₅. La seconde trame est affichée une première fois entre les instants t₃₇₅ et t₄₀₀, et une seconde fois entre les instants t₄₀₀ et t₄₂₅.

Comme cela est illustré en figure 5A, les premières lignes des deux trames, B_{1B1}, B_{1T1}, B_{1B2}, B_{1T2} sont décodées à la suite entre les instants t₃₀₀ et t₃₂₅ puis les dernières lignes des deux trames, B_{1B3}, B_{1T3}, B_{1B4}, B_{1T4}, sont décodées entre les instants t₃₂₅ et t₃₅₀. Les premières lignes des deux trames sont décodées une seconde fois entre les instants t₃₅₀ et t₃₇₅ et les dernières lignes des deux trames sont décodées une seconde fois entre les instants t₃₇₅ et t₄₀₀.

Comme cela est illustré en figure 5B, seules les lignes de la première trame, B_{1T1}, B_{1T2}, B_{1T3} et B_{1T4} sont mémorisées entre les instants t₃₀₀ et t₃₅₀, et seules les lignes de la seconde trame, B_{1B1}, B_{1B2}, B_{1B3} et B_{1B4} sont mémorisées entre les instants t₃₅₀ et t₄₀₀.

On notera que, alors que la première ligne de la première trame B_{1T1} est affichée pour la seconde fois, la première ligne de la seconde trame B_{1B1} est décodée et stockée en mémoire. On prévoit de ne stocker la ligne B_{1B1} qu'après que la première ligne B_{1T1} de la première trame est fournie au circuit d'affichage 10 pour être affichée. Cette écriture en mémoire particulière n'est nécessaire que pour le stockage de la première ligne de la seconde trame. En effet, le décodage et le stockage de la deuxième ligne de la seconde trame B_{1B2} se fait alors que l'on affiche déjà la troisième ligne de la première trame B_{1T3} et il n'y a plus de possibilité de conflit entre le stockage et la lecture en mémoire tampon. Dans la séquence illustrée, l'image qui suit l'image B₁ est l'image bidirectionnelle B₂, mais elle pourrait indifféremment être une image intra ou prédite sans que le fonctionnement qui vient d'être décrit soit modifié.

Bien entendu, la présente invention est susceptible de diverses variantes et modifications qui apparaîtront à l'homme de l'art. A titre d'exemple, on a décrit en figures 4A à 5C un affichage de type AABB dans lequel la première trame des images est affichée avant la seconde trame, mais l'homme du métier adaptera aisément la présente invention à un affichage de type AABB dans lequel la seconde trame des images est affichée avant la première trame. D'autre part, la présente invention n'a été décrite qu'en relation avec le décodage et l'affichage d'images de type FRAME, mais l'homme du métier adaptera aisément le circuit selon la présente invention, qui utilise une mémoire contenant deux images décodées et demie, à un circuit pouvant également réaliser un décodage et un affichage d'images de type FIELD dans les mêmes conditions. Enfin, la présente invention a été décrite en relation avec un affichage 100-120 hertz mais elle pourra aisément être adaptée à d'autres types d'affichage d'images devant être décodées deux fois plus lentement qu'elles ne sont affichées.

## Revendications

1. Procédé de décodage d'une image numérique (B₁) codée et d'affichage de cette image sous forme de deux trames entrelacées (B_{1T}, B_{1B})répétées, le décodage de l'image étant deux fois plus long que l'affichage d'une trame, comprenant notamment les étapes consistant à :
a/ décoder la première moitié de l'image en stockant progressivement la première moitié de la première trame (B_{1T1}, B_{1T2}),
b/ décoder la seconde moitié de l'image en stockant progressivement la seconde moitié de la première trame (B_{1T3}, B_{1T4}), tout en affichant une première fois la première trame (B_{1T}),
c/ afficher une seconde fois la première trame (B_{1T}), tout en décodant à nouveau la première moitié de l'image et en remplaçant progressivement en mémoire la première moitié de la première trame (B_{1T1}, B_{1T2}) par la première moitié de la seconde trame (B_{1B1}, B_{1B2})
d/ décoder la seconde moitié de l'image en remplaçant progressivement la seconde moitié de la première trame (B_{1T3}, B_{1T4}) par la seconde moitié de la seconde trame (B_{1B3}, B_{1B4}), tout en affichant une première fois la seconde trame (B_{1B}), et
e/ afficher une seconde fois la seconde trame (B_{1B}) tandis que l'on répète l'étape a/ pour l'image suivante.

2. Procédé de décodage et d'affichage d'une image numérique selon la revendication 1, **caractérisé en ce que** l'image est une image bidirectionnelle codée suivant la norme MPEG.

3. Circuit destiné à mettre en oeuvre le procédé de décodage et d'affichage selon la revendication 2, **caractérisé en ce qu'**il comprend : un décodeur MPEG (2) et une mémoire (4) ayant une capacité de mémorisation correspondant au nombre de données contenues dans deux images décodées et demie.

## Claims

1. A method for decoding a coded digital image (B₁) and displaying this image in the form of two interlaced frames (B_{1T}, B_{1B}), the image decoding being twice as long as the displaying of a frame, including the steps of:
a/ decoding the first half of the image while progressively storing the first half of the first frame (B_{1T1}, B_{1T2}),
b/ decoding the second half of the image while progressively storing the second half of the first frame (B_{1T3}, B_{1T4}), while displaying the first frame (B_{1T}) for a first time,
c/ displaying the first frame (B_{1T}) for a second time, while decoding again the first half of the image and progressively replacing in the memory the first half of the first frame (B_{1T1}, B_{1T2}) with the first half of the second frame (B_{1B1}, B_{1B2}),
d/ decoding the second half of the image while progressively replacing the second half of the first frame (B_{1T3}, B_{1T4}) with the second half of the second frame (B_{1B3}, B_{1B4}), while displaying the second frame (B_{1B}) for a first time, and
e/ displaying the second frame (B_{1B}) for a second time while step a/ is repeated for the next image.

2. The method for decoding and displaying a digital image of claim 1, **characterized in that** the image is a bidirectional image coded according to MPEG standard.

3. A circuit intended for implementing the decoding and displaying method of claim 2, **characterized in that** it includes: an MPEG decoder (2) and a memory (4) having a storage capacity corresponding to the number of data contained in two and a half decoded images.

## Patentansprüche

1. Verfahren zur Dekodierung eines kodierten digitalen Bilds (B₁) und zur Anzeige bzw. Wiedergabe dieses Bildes in der Form von zwei miteinander verschränkten bzw verflochtenen wiederholten Einzel-Teilbildern bzw, Frames (B_{1T}, B_{1B}) , wobei die Dekodierung zweimal solang wie die Anzeige bzw. Wiedergabe eines Einzel-Teilbilds bzw. Frames ist, das Verfahren umfassend die folgenden Schritte bzw. Stufen, welche bestehen in:
a/ Dekodieren der ersten Hälfte des Bildes unter gleichzeitiger fortschreitender Speicherung der ersten Hälfte des ersten Teilbilds bzw. Frames (B_{1T1}, B_{1T2}),
b/ Dekodieren der zweiten Hälfte des Bildes unter gleichzeitiger fortschreitender Speicherung der zweiten Hälfte des ersten Teilbilds bzw Frames (B_{1T3}, B_{1T4}) bei gleichzeitiger erstmaliger Anzeige bzw. Wiedergabe des ersten Teilbildss bzw Frames (B_{1T}),
c/ zweitmalige Anzeige bzw. Wiedergabe des ersten Teilbilds bzw Frames (B_{1T}), bei gleichzeitiger erneuter Dekodierung der ersten Hälfte des Bildes und fortschreitendem Ersetzen im Speicher der ersten Hälfte des ersten Teilbilds bzw. Frames (B_{1T1}, B_{1T2}) durch die erste Hälfte des zweiten fieilbilds bzw. Frames (B_{1B1}, B_{1B2}) ;
d/ Dekodieren der zweiten Hälfte des Bildes bei fortschreitendem Ersetzen der zweiten Hälfte des ersten Teilbildes bzw Frames (B_{1T3}, B_{1T4}) durch die zweite Hälfte des zweiten Teilbilds bzw. Frames (B_{1B3}, B_{1B4}), bei gleichzeitiger erstmaliger Anzeige bzw. Wiedergabe des zweiten Teilbilds bzw. Frames (B_{1B}), sowie
e/ zweitmalige Anzeige bzw, Wiedergabe des zweiten Teilbilds bzw. Frames (B_{1B}), während man den Schritt a/ für das folgende Bild wiederholt,

2. Verfahren zur Dekodierung und zur Anzeige bzw. Wiedergabe eines digitalen Bildes nach Anspruch 1, **dadurch gekennzeichnet, dass** das Bild ein gemäß der Norm MPEG kodiertes bidirektionales Bild ist.

3. Schaltung zur Ausführung des Verfahrens zur Dekodierung und zur Anzeige bzw. Wiedergabe nach Anspruch 2, **dadurch gekennzeichnet dass** die Schaltung umfasst: einen MPEG- Dekoder (2), und einen Speicher (4) mit einer Speicherkapazität entsprechend der Zahl von in zweieinhalb kodierten Bildern enthaltenen Daten.
